# EUROPEAN PATENT APPLICATION

(11) **EP 4 699 693 A1**
(43) Date of publication of application: **25.02.2026**
(21) Application number: 24792566.2
(22) Date of filing: 09.04.2024
(51) Int. Cl.: B01J 21/18, B01J 27/24, B01J 35/39, B01J 35/54, B01J 37/02, C01B 3/04, C01B 32/26, C25B 1/04, C25B 1/55, C25B 9/00, C25B 9/50, C25B 11/043, C25B 11/049, C25B 11/052, C25B 11/083, C25B 11/087

(54) **SEMICONDUCTOR CATALYST, CATALYST ELECTRODE, METHOD FOR PRODUCING REDUCED PRODUCT, AND DEVICE FOR PRODUCING REDUCED PRODUCT**

(30) Priority: 18.04.2023 JP 2023068141; 01.06.2023 JP 2023091246; 02.06.2023 JP 2023091950
(71) Applicant: Daicel Corporation, Osaka-shi, Osaka 530-0011 (JP); National University Corporation Kanazawa University, Ishikawa 920-1192 (JP)
(72) Inventor: TOKUDA, Norio, Kanazawa-shi, Ishikawa 920-1192 (JP); ASAKAWA, Hitoshi, Kanazawa-shi, Ishikawa 920-1192 (JP); ICHIKAWA, Kimiyoshi, Kanazawa-shi, Ishikawa 920-1192 (JP); YAMASAKI, Satoshi, Kanazawa-shi, Ishikawa 920-1192 (JP); MATSUMOTO, Tsubasa, Kanazawa-shi, Ishikawa 920-1192 (JP); YOSHIKAWA, Taro, Tokyo 108-8230 (JP); KAGA, Akira, Tokyo 108-8230 (JP); MAHIKO, Tomoaki, Tokyo 108-8230 (JP)
(74) Representative: Grünecker Patent- und Rechtsanwälte PartG mbB
(86) International application number: PCT/JP2024/014429
(87) International publication number: WO 2024/219291

(57) **Abstract**

A semiconductor catalyst is provided, which exhibits an effect of accelerating a reduction reaction by visible light irradiation and is excellent in durability. The semiconductor catalyst of the present disclosure includes thin film containing nitrogen-containing diamond particles in a plane direction and a height direction. The semiconductor catalyst can be produced by, for example, fixing, on a substrate having a positive or negative charge, nitrogen-containing diamond particles having a positive or negative charge, the positive or negative charge of the nitrogen-containing diamond particles being opposite to that of the substrate, and laminating, on the fixed nitrogen-containing diamond particles, nitrogen-containing diamond particles having a positive or negative charge, the positive or negative charge of the laminated nitrogen-containing diamond particles being opposite to that of the fixed nitrogen-containing diamond particles. The step of laminating is performed at least once after the step of fixing.

## Description

### Technical Field

The present disclosure relates to a novel semiconductor catalyst, a method for producing a reduced product using the semiconductor catalyst, a reduced product production device that produces a reduced product using the semiconductor catalyst, a catalyst electrode for producing hydrogen including the semiconductor catalyst, a method for producing hydrogen using the catalyst electrode, and a hydrogen production device that produces hydrogen using the catalyst electrode. The present application claims the priority of JP 2023-68141 filed in Japan on April 18, 2023, of JP 2023-91246 filed on June 1, 2023, and of JP 2023-91950 filed in Japan on June 2, 2023, the entire contents of which are incorporated herein by reference.

### Background Art

To prevent global warming, it is urgently required to reduce the emission of greenhouse gases such as carbon dioxide. In such a situation, it is necessary to switch the energy source from fossil fuel such as coal and petroleum to non-fossil fuel. As a non-fossil fuel, hydrogen has been attracting attention. When hydrogen is used as an energy source for power generation, carbon dioxide is not emitted, and thus the environmental load can be reduced.

Hydrogen can be produced by, for example, steam reforming of fossil fuel such as coal or petroleum, but from the viewpoint of reducing the load on the environment, a method of producing hydrogen by electrolyzing water has attracted attention. It has been studied to electrolyze water by using solar energy.

Patent Document 1 discloses that hydrogen is produced when a semiconductor photoelectrode prepared by laminating, on a surface of an n-type gallium nitride thin film as a semiconductor film, titanium and aluminum in a honeycomb pattern as a current collector layer and then laminating a catalyst layer containing a metal oxide such as nickel oxide is irradiated with light from the catalyst layer side in a state of being immersed in an aqueous sodium hydroxide solution.

### Citation List

### Patent Document

Patent Document 1: JP 2018-90887 A

### Summary of Invention

### Technical Problem

Since n-type gallium nitride has a large band gap, ultraviolet-ray irradiation is necessary for photoexcitation of the n-type gallium nitride. However, the sunlight reaching the ground surface contains only 5 to 6% of ultraviolet rays, and thus, it is difficult to efficiently use the solar energy.

So, separately providing a catalyst layer (for example, a metal catalyst layer such as nickel oxide) can narrow the band gap to provide visible light responsiveness.

However, unfortunately, the metal catalyst layer of n-type gallium nitride, nickel oxide, or the like is easily deteriorated by elution, decomposition, corrosion, or the like, and thus, the use environment is limited.

Accordingly, an object of the present disclosure is to provide a semiconductor catalyst that exhibits an effect of promoting a reduction reaction by visible light irradiation and has excellent durability.

Another object of the present disclosure is to provide a method for producing the semiconductor catalyst.

Another object of the present disclosure is to provide a method for producing a reduced product, the method including subjecting a reducible substance to a reduction treatment using the semiconductor catalyst to produce a corresponding reduced product.

Another object of the present disclosure is to provide a device that produces a reduced product using the semiconductor catalyst.

### Solution to Problem

As a result of diligent research to solve the issues described above, the present inventors discovered the following:
1. A thin film containing nitrogen-containing diamond particles, which are physically and chemically very stable, has excellent durability;
2. In a semiconductor catalyst including a thin film containing nitrogen-containing diamond particles in a plane direction and a height direction, a donor level is formed at a position close to a conduction band in a band gap of diamond. Thus, when irradiated with visible light, the semiconductor catalyst easily shifts to an excited state, releases electrons, and exhibits a catalytic effect of promoting a reduction reaction of a reducible substance; and
3. When a laminate of the semiconductor catalyst and a conductive member is used as a working electrode and is irradiated with visible light in a state of being in contact with water together with a counter electrode, a reduction reaction of water efficiently proceeds to produce hydrogen.

The present disclosure has been completed based on these findings.

That is, the present disclosure provides a semiconductor catalyst including a thin film containing nitrogen-containing diamond particles in a plane direction and a height direction.

The present disclosure also provides the semiconductor catalyst, in which the thin film is configured in a manner that the nitrogen-containing diamond particles are arranged in the plane direction and the height direction, and adjacent diamond particles in the plane direction and the height direction are in close contact with each other.

The present disclosure also provides the semiconductor catalyst, in which a nitrogen atom concentration of the thin film is 10 × 10¹⁸ atoms/cm³ or more.

The present disclosure also provides the semiconductor catalyst, in which the thin film has a thickness of 5 nm or more.

The present disclosure also provides the semiconductor catalyst, in which a surface of the semiconductor catalyst has negative electron affinity.

The present disclosure also provides the semiconductor catalyst that is a visible light-responsive catalyst.

The present disclosure also provides the semiconductor catalyst that is a catalyst for reduction.

The present disclosure also provides the semiconductor catalyst that is a catalyst for producing hydrogen.

The present disclosure also provides a method for producing a semiconductor catalyst, the method including:
fixing, on a substrate having a positive or negative charge, nitrogen-containing diamond particles having a positive or negative charge, the positive or negative charge of the nitrogen-containing diamond particles being opposite to that of the substrate; and
laminating, on the fixed nitrogen-containing diamond particles, nitrogen-containing diamond particles having a positive or negative charge, the positive or negative charge of the laminated nitrogen-containing diamond particles being opposite to that of the fixed nitrogen-containing diamond particles.

The step of laminating is performed at least once after the step of fixing to produce the semiconductor catalyst.

The present disclosure also provides a method for producing a reduced product, the method including reducing a reducible substance under visible light irradiation and in the presence of the semiconductor catalyst to produce a corresponding reduced product.

The present disclosure also provides a device for producing a reduced product, the device including the semiconductor catalyst.

The present disclosure also provides a catalyst electrode for producing hydrogen, the catalyst electrode including a catalyst layer (1) and a conductive layer (2), in which the catalyst layer (1) contains the semiconductor catalyst.

The present disclosure also provides the catalyst electrode for producing hydrogen, in which the conductive layer (2) is a layer having a diamond crystal structure in which some carbon atoms are replaced by boron atoms.

The present disclosure also provides the catalyst electrode for producing hydrogen, in which a boron atom concentration in the conductive layer (2) is 1 × 10¹⁹ atoms/cm³ or more.

The present disclosure also provides the catalyst electrode for producing hydrogen, in which the catalyst layer (1) has a thickness from 1 nm to 100 µm, and the conductive layer (2) has a thickness of 1 µm or more.

The present disclosure also provides a method for producing hydrogen, the method including reducing water under visible light irradiation using the catalyst electrode for producing hydrogen to produce hydrogen.

The present disclosure also provides a device for producing hydrogen, the device including a water electrolysis cell. The water electrolysis cell includes a water container, the catalyst electrode for producing hydrogen disposed to be in contact with water in the container, and a counter electrode.

### Advantageous Effects of Invention

The semiconductor catalyst of the present disclosure is formed of diamond particles that are physically and chemically very stable, and thus has excellent durability and is not limited in the use environment.

**In** addition, the diamond particles themselves have a large band gap, and photoexcitation thereof requires ultraviolet-ray irradiation. So, in the semiconductor catalyst of the present disclosure, nitrogen-containing diamond particles are used. **In** the nitrogen-containing diamond particles, a donor level is formed at a position close to the conduction band. Thus, when irradiated with visible light or sunlight, the semiconductor catalyst can easily release electrons, and exhibit an effect of promoting a reduction reaction.

The semiconductor catalyst having the above characteristics can be suitably used as a catalyst for reduction or a visible light-responsive catalyst. The semiconductor catalyst can also be suitably used as a catalyst for promoting a reaction of producing hydrogen from water (for example, a catalyst for producing hydrogen).

A laminate produced by laminating the semiconductor catalyst on a conductive member can be suitably used as a catalyst electrode in a reaction of electrolyzing water to produce hydrogen.

When the semiconductor catalyst is used for an electrode, it is possible to efficiently carry out the water electrolysis reaction by effectively utilizing the inexhaustible solar energy, thereby enabling the production of hydrogen, which is a clean energy, while suppressing the generation of carbon dioxide.

### Brief Description of Drawings

FIG. 1 is a graph showing the results of an analysis of the concentrations of boron atoms and nitrogen atoms in a laminate produced in Example 1.
FIG. 2 is a schematic view of an H-type cell used for measuring the amount of hydrogen produced using a catalyst electrode.
FIG. 3 is a graph showing the LSV measurement results of the catalyst electrode produced in Example 2.

### Description of Embodiments

### [Semiconductor Catalyst]

The semiconductor catalyst of the present disclosure includes a thin film containing nitrogen-containing diamond particles in a plane direction and a height direction. The semiconductor catalyst contains nitrogen-containing diamond particles on a surface thereof. Thus, the semiconductor catalyst has a large surface area and can exhibit an effect of promoting a reduction reaction by efficiently utilizing solar energy.

The nitrogen-containing diamond particles contain carbon atoms and nitrogen atoms as atoms other than carbon atoms (i.e., heteroatoms), and have a configuration in which some of the carbon atoms constituting the diamond crystal structure are replaced by nitrogen atoms.

The thin film includes the following configuration:
1. A thin film configured in a manner that the nitrogen-containing diamond particles are arranged in the plane direction and the height direction, and among the nitrogen-containing diamond particles, adjacent nitrogen-containing diamond particles in the plane direction and the height direction are in close contact with each other;
2. A thin film configured in a manner that nitrogen-containing diamond particles are dispersed in a solid dispersion medium (for example, a resin or the like) in the plane direction and the height direction.

Among these, the thin film is preferably a thin film having the configuration of 1, from the viewpoint of excellent durability and a significant improvement in the catalytic effect of the reduction reaction (that is, the reaction of subjecting the reducible substance to the reduction treatment to produce the corresponding reduced product), and particularly preferably a thin film configured in a manner that the nitrogen-containing diamond particles are arranged in the plane direction and the height direction, and, among the nitrogen-containing diamond particles, adjacent nitrogen-containing diamond particles in the plane direction and the height direction are in close contact with each other by the Coulomb force and/or the van der Waals force.

The thin film has a thickness of, for example, 1 nm or more and 100 µm or less. From the viewpoint of exhibiting sufficient electron emission capability, the lower limit of the thicknesses of the thin film is preferably 3 nm, more preferably 5 nm, even more preferably 10 nm, yet even more preferably 15 nm, still even more preferably 30 nm, even further preferably 40 nm, particularly preferably 45 nm, most preferably 50 nm, and especially preferably 60 nm. From the viewpoint of suppressing electrical resistance, the upper limit of the thickness is preferably 10 µm, particularly preferably 1 µm, and most preferably 100 nm. When the thickness of the thin film is less than the above range, the utilization efficiency of visible light for electron excitation decreases, and the electron emission capability tends to become insufficient. On the other hand, when the thickness of the thin film exceeds the above range, the amount of electron excitation through visible light irradiation becomes saturated, and the electrical resistance increases, and thus the reducing property tends to decrease.

The nitrogen atom concentration of the thin film is, for example, 5 × 10¹⁸ atoms/cm³ or more, preferably 1 × 10¹⁹ atoms/cm³ or more, particularly preferably 5 × 10¹⁹ atoms/cm³ or more, and especially preferably 1 × 10²⁰ atoms/cm³ or more. The upper limit of the nitrogen atom concentration is, for example, 5 × 10²² atoms/cm³, preferably 1 × 10²² atoms/cm³, particularly preferably 5 × 10²¹ atoms/cm³, and most preferably 4 × 10²¹ atoms/cm³. Since the thin film contains nitrogen atoms in the above range, the thin film has visible light responsiveness, and when the thin film is irradiated with visible light, electrons are easily transitioned to an excited state and emitted. When the nitrogen atom concentration is less than the above range, the electron emission capability tends to be insufficient. On the other hand, when the nitrogen atom concentration exceeds the above range, the diamond crystal structure is likely to collapse, and the electron emission performance tends to decrease.

The nitrogen atom concentration of the thin film may be uniform or may be inclined from the central portion towards the surface layer portion. In the thin film, when the nitrogen atom concentration increases from the central portion towards the surface layer portion, the electron emission capability tends to be further improved. The "surface layer portion of the thin film" is, for example, a portion from the surface (depth 0) to the depth of 150 nm in the thin film.

The nitrogen atom concentration of the surface layer portion of the thin film is, for example, 1 × 10¹⁹ atoms/cm³ or more, preferably 5 × 10¹⁹ atoms/cm³ or more, more preferably 1 × 10²⁰ atoms/cm³ or more, even more preferably 2 × 10²⁰ atoms/cm³ or more, particularly preferably 3 × 10²⁰ atoms/cm³ or more, and most preferably 4 × 10²⁰ atoms/cm³ or more. The upper limit of the nitrogen atom concentration is, for example, 5 × 10²² atoms/cm³, preferably 1 × 10²¹ atoms/cm³, and more preferably 5 × 10²¹ atoms/cm³.

The thickness of the portion of the thin film having a nitrogen atom concentration of 1 × 10¹⁹ atoms/cm³ or more is preferably 5 nm or more (e.g., 5 to 150 nm, preferably 5 to 100 nm, particularly preferably 5 to 50 nm), more preferably 10 nm or more, further preferably 15 nm or more, particularly preferably 20 nm or more, most preferably 25 nm or more, especially preferably 30 nm or more.

The thin film may contain heteroatoms other than the nitrogen atom, and for example, may contain boron atoms.

When the thin film contains boron atoms, the concentration of the boron atoms is, for example, 1 × 10¹³ atoms/cm³ or more, preferably 1 × 10¹⁴ atoms/cm³ or more, more preferably 1 × 10¹⁵ atoms/cm³ or more, even more preferably 1 × 10¹⁶ atoms/cm³ or more, yet even more preferably 1 × 10¹⁷ atoms/cm³ or more, still even more preferably 1 × 10¹⁸ atoms/cm³ or more, even further preferably 1 × 10¹⁹ atoms/cm³ or more, yet even further preferably 5 × 10¹⁹ atoms/cm³ or more, particularly preferably 3 × 10²⁰ atoms/cm³ or more, most preferably 5 × 10²⁰ atoms/cm³ or more, and especially preferably 1 × 10²¹ atoms/cm³ or more. The upper limit of the boron atom concentration is, for example, 5 × 10²² atoms/cm³, preferably 3 × 10²² atoms/cm³, and particularly preferably 1 × 10²² atoms/cm³.

The thin film may further contain other heteroatoms in addition to boron atoms and nitrogen atoms, and the concentration of the other heteroatoms is preferably 5 × 10²¹ atoms/cm³ or less from the viewpoint of having a high electron emission capability, and is more preferably 5 × 10²⁰ atoms/cm³ or less, even more preferably 5 × 10¹⁹ atoms/cm³ or less, yet even more preferably 5 × 10¹⁸ atoms/cm³ or less, particularly preferably 1 × 10¹⁸ atoms/cm³ or less, most preferably 1 × 10¹⁷ atoms/cm³ or less, and especially preferably 1 × 10¹⁶ atoms/cm³ or less.

The heteroatom content (nitrogen atom content and boron atom content) in the thin film and the thickness of the thin film are determined by secondary ion mass spectrometry (SIMS) or the like.

The thin film has a surface roughness Rms (root mean square roughness) of, for example, 1 nm or more, preferably 5 nm or more, particularly preferably 10 nm or more, from the viewpoint of increasing the specific surface area. Moreover, the upper limit of the surface roughness Rms is, for example, 100 nm, preferably 80 nm, particularly preferably 50 nm, and most preferably 30 nm.

Further, the surface layer portion of the thin film is preferably hydrogen-terminated. The hydrogen termination makes the surface of the thin film have a negative electron affinity, and electrons are easily released from the surface of the thin film, and thus, the catalytic effect of the reduction reaction is significantly improved.

The thin film may contain other components in addition to the nitrogen-containing diamond particles and the resin. Examples of the other component include components derived from the substrate used in the producing process (for example, silicon compounds such as silicon carbide).

The semiconductor catalyst is composed substantially only of the thin film. When the semiconductor catalyst contains components other than thin film, the content of such components is, for example, 10 wt.% or less, preferably 5 wt.% or less, more preferably 3 wt.% or less, particularly preferably 1 wt.% or less, most preferably 0.5 wt.% or less, and especially preferably 0.1 wt.% or less, based on the total amount of the semiconductor catalyst.

As described above, the semiconductor catalyst has a function of releasing electrons in response to irradiation with visible light, and thus can be suitably used as a visible light-responsive catalyst.

As described in detail later, when the semiconductor catalyst is used, the reducible substance can be reduced under visible light irradiation to produce a corresponding reduced product, and for example, when H₂O is used as the reducible substance, hydrogen can be produced as the corresponding reduced product, and thus, the semiconductor catalyst can be suitably used as a catalyst for reduction or a catalyst for producing hydrogen.

### [Method for Producing Semiconductor Catalyst]

The method for producing the semiconductor catalyst (or the thin film) includes a production method through the following steps:
Step 1: fixing nitrogen-containing diamond particles on a substrate; and
Step 2: removing the substrate.

### (Step 1)

In Step 1, nitrogen-containing diamond particles are fixed on a substrate.

Note that in the present disclosure, "nitrogen-containing diamond particles" are diamond particles containing nitrogen atoms, and the site at which a nitrogen atom is contained is not limited. The diamond particles are composed of a core part made of sp3 carbons and a shell part made of sp2 carbons, and the nitrogen atom may be contained in the core part or in the shell part. Further, the nitrogen atom may be contained in the boundary between the core part and the shell part.

The shape of the nitrogen-containing diamond particles is not particularly limited, and examples thereof include a spherical shape (e.g., a true spherical shape, a substantially true spherical shape, and an elliptically spherical shape), a polyhedral shape, a rod shape (e.g., a cylindrical shape, a prismatic shape), a flat plate shape, a flaky shape, and an irregular shape.

The nitrogen-containing diamond particles have an average particle size of, for example, from 1 nm to 100 µm. Moreover, the upper limit of the average particle size is preferably 10 µm, more preferably 1 µm, particularly preferably 100 nm, and most preferably 50 nm, and especially preferably 20 nm. If the average particle size is less than the above range, the nitrogen-containing diamond particles are removed together with the substrate when the substrate is removed in Step 2, and this may make it difficult to form the thin film. On the other hand, when the average particle size exceeds the above range, the resulting thin film tends to become thick, the electrical resistance increases, and the reducing property tends to decrease. Note that the average particle size is the median diameter (d50) determined by a laser diffraction/scattering method.

The nitrogen-containing diamond particles are produced, for example, by a method of adding a nitrogen source to a raw material when producing nanodiamond particles by a detonation method or the like, a method of preparing a growth film containing nitrogen-doped diamonds produced by a CVD method and pulverizing the resulting growth film, and a method of doping nitrogen atoms into undoped nanodiamond particles through an ion implantation method.

The method for fixing the nitrogen-containing diamond particles on the substrate is not particularly limited, and examples thereof include a method in which a paint containing nitrogen-containing diamond particles is applied onto the substrate and dried to fix the nitrogen-containing diamond particles on the substrate.

The paint contains a solvent along with the nitrogen-containing diamond particles. Examples of the solvent include water; alcohols such as ethanol and propanol; hydrocarbons such as toluene; cyclic ethers such as tetrahydrofuran; and ketones such as methyl isobutyl ketone. One type of these may be used alone, or two or more types thereof may be used in combination. As the solvent, among these, water and/or alcohols are preferable in terms of exhibiting excellent dispersibility of the nitrogen-containing nanodiamond particles.

The paint may further contain a thickener, a dispersant, a buffering agent, and the like.

The content of the nitrogen-containing diamond particles in the paint is, for example, from 0.001 to 5.0 wt.%, and preferably from 0.1 to 1.0 wt.%.

Examples of the substrate thereof include a silicon substrate, a quartz substrate, a ceramic substrate, a glass substrate, a metal substrate (e.g., an aluminum substrate, a copper substrate, an iron substrate, a stainless steel substrate, and a brass substrate), and a plastic substrate (e.g., a polyimide substrate and a polyamide substrate). Among these, a silicon substrate is preferable in that it excels in heat resistance, mass productivity, thermal shock resistance, and the like.

The surface of the substrate may be subjected to ultrasonic cleaning with acetone, ethanol, pure water, or the like. Further, the surface of the substrate may also be subjected to an acid wash or the like with hydrochloric acid, hydrofluoric acid, or the like. **In** addition, fine unevenness may be formed on the surface of the substrate.

The paint can be applied by, for example, a printing method or a coating method. Specific examples include a screen printing method, a mask printing method, an offset printing method, an inkjet printing method, a flexographic printing method, a gravure printing method, spin-coat method, stamping, dispensing, a squeegee printing method, a silk screen printing method, and spraying brush coating.

The paint may be applied only once or may be applied repeatedly a plurality of times. Among these, from the viewpoint of improving the electron emission capability and exhibiting particularly excellent effect in promoting the reduction reaction of the reducible substance, it is preferable to form a coating film having an appropriate thickness by repeatedly applying the coating liquid a plurality of times. The number of times of application is, for example, preferably 2 or more, more preferably 5 or more, particularly preferably 8 or more, and most preferably 10 or more. The upper limit of application is, for example, 20 and preferably 15.

The thickness of the coating film is, for example, 1 nm or more and 100 µm or less. From the viewpoint of improving electron emission capability and exhibiting excellent effects in promoting the reduction reaction of the reducible substance, the lower limit of the thickness is preferably 3 nm, more preferably 10 nm, particularly preferably 30 nm, most preferably 50 nm, and especially preferably 70 nm. From the viewpoint of suppressing an increase in the electrical resistance, the upper limit of the thickness is preferably 10 µm, particularly preferably 1 µm, and most preferably 100 nm.

When the coating material is applied repeatedly a plurality of times, the following method A or method B can be adopted:
Method A: applying and drying repeatedly a plurality of times, onto a substrate having a positive or negative charge, a paint containing nitrogen-containing diamond particles having a positive or negative charge that is opposite to that of the substrate;
Method B: performing the following Step I once and then performing the following Step II at least once:
   Step I: applying, onto a substrate having a positive or negative charge, a paint containing nitrogen-containing diamond particles having a positive or negative charge that is opposite to that of the substrate, and thereby fixing the nitrogen-containing diamond particles on the substrate;
   Step II: applying, onto the fixed nitrogen-containing diamond particles, a paint containing nitrogen-containing diamond particles having a positive or negative charge that is opposite to that of the fixed nitrogen-containing diamond particles, and thereby laminating the nitrogen-containing diamond particles having the opposite charge onto the fixed nitrogen-containing diamond particles.

In Step I, when the paint containing the nitrogen-containing diamond particles having the charge opposite to that of the substrate is applied onto the substrate, the nitrogen-containing diamond particles in the paint migrate towards the substrate due to Coulomb force. Furthermore, when the nitrogen-containing diamond particles approach the substrate, van der Waals force is applied in addition to the Coulomb force, and the diamond particles are adsorbed and fixed on the substrate.

In Step II, the nitrogen-containing diamond particles in the aqueous dispersion migrate toward the fixed nitrogen-containing diamond particles due to the Coulomb force, and when these diamond particles approach each other, these diamond particles are adsorbed and fixed due to the addition of the van der Waals force to the Coulomb force.

It is preferable that there be a larger amplitude between the zeta potential of the nitrogen-containing fixed diamond particles and the zeta potential of the nitrogen-containing diamond particles having the charge opposite to that of the fixed nitrogen-containing diamond particles. With such a larger amplitude, a larger Coulomb force and a larger van der Waals force are generated, whereby the nitrogen-containing diamond particle layer can be uniformly and densely laminated.

The amplitude is represented by the sum of the absolute value of the zeta potential of the fixed nitrogen-containing diamond particles and the absolute value of the zeta potential of the nitrogen-containing diamond particles having a charge opposite to that of the fixed nitrogen-containing diamond particles, and is, for example, 40 mV or more, preferably 50 mV or more, more preferably 60 mV or more, particularly preferably 65 mV or more, most preferably 70 mV or more, and especially preferably 80 mV or more. The upper limit value of the sum of the absolute values of the zeta potentials is, for example, 120 mV.

Before Step II, the substrate coated with the coating material containing the nitrogen-containing diamond particles may be washed with water or the like. Since the excess coating material is removed by washing, a thin film having a uniform thickness (preferably, a thin film having a uniform thickness and in-plane uniformity) can be formed.

Through this step, a thin film containing nitrogen-containing diamond particles in the plane direction and the height direction can be formed on a surface of the substrate.

### (Step 2)

In Step 2, the substrate is removed from the substrate having the thin film formed through Step 1.

The method for removing the substrate can be appropriately selected according to the type of substrate. For example, when a silicon substrate is used as the substrate, a method of dissolving and removing the substrate using a mixed liquid of hydrofluoric acid and nitric acid can be selected.

Through the step, a thin film containing nitrogen-containing diamond particles in the plane direction and the height direction (preferably, a thin film containing nitrogen-containing diamond particles uniformly in the plane direction and the height direction) is produced.

The thin film containing nitrogen-containing diamond particles in the plane direction and the height direction, which is produced through the step of removing the substrate, may be subjected to Step 3:
Step 3: performing hydrotreatment and/or sp2 carbon removal treatment.

These treatments can be performed by, for example, irradiating the thin film with hydrogen plasma.

By irradiating the thin film with hydrogen plasma, a thin film containing nitrogen-containing diamond particles in the plane direction and the height direction, in which the nitrogen-containing diamond particles contained in the thin film are bonded to each other, and the bonds present on the surface of the thin film are hydrogen-terminated, is produced. Furthermore, the thin film containing the nitrogen-containing diamond particles in the plane direction and the height direction and having the sp2 carbons removed is produced.

Since nitrogen-containing diamond particles are used in the above method, the nitrogen atom concentration can be increased without damaging the diamond crystal structure, and a thin film (or a thin-film catalyst) having both an electron emission capability derived from the diamond crystal structure and good visible light responsiveness can be produced.

### [Method for Producing Reduced Product]

The method for producing a reduced product of the present disclosure is a method for reducing a reducible substance under visible light irradiation and in the presence of the catalyst (or the thin film) to produce a corresponding reduced product.

The reduction reaction is preferably carried out in the aqueous electrolyte liquid. When the reaction is carried out in the aqueous electrolyte liquid, electrons released from the catalyst react with water to form hydrated electrons (e_{aq}⁻), and the formed hydrated electrons can stably exist in the aqueous electrolyte liquid, and can reduce the reducible substance in the aqueous electrolyte liquid to efficiently produce the corresponding reduced product.

The aqueous electrolyte liquid is an electrolyte liquid containing water as a solvent. Examples of the electrolyte contained in the aqueous electrolyte liquid include potassium chloride, sodium chloride, lithium chloride, potassium hydroxide, sodium hydroxide, lithium hydroxide, potassium sulfate, sodium sulfate, zinc sulfate, zinc nitrate, zinc phosphate, zinc acetate, iron hydroxide, and manganese chloride. One type of these may be used alone, or two or more types thereof may be used in combination.

The reduction reaction includes the following aspects:
[1] The reducible substance only receives electrons from hydrated electrons (decomposition reaction is not included);
[2] The reducible substance receives electrons from the hydrated electrons and decomposes;
[3] The hydrated electrons react with water molecules to produce hydrogen radicals, and the resulting hydrogen radicals reduce the reducible substance.

Examples of the reducible substance include H₂O, CO₂, O₂, N₂, NO, N₂O, a contaminant (for example, an organic or inorganic compound), an organic fluorine compound (or a fluorinated hydrocarbon), a metal ion, and a metal complex ion.

The reducible substance and the corresponding reduced product are shown below.

### [Table 1]

**Table 1**

| Reducible substance | Reduced product |
|---|---|
| CO₂ | CO₂⁻ |
| | CO |
| | HCOO⁻ |
| | C₂O₄²⁻ |
| N₂ | NH₃ |
| NO | NO⁻ |
| N₂O | N₂+O⁻ |
| O₂ | O₂⁻ |
| | H₂O₂ |
| H₂O | H₂ |
| Perfluoroalkyl compound | Defluorination compound (Alkyl compound) |
| Perfluorobenzene | Defluorination compound (Benzene) |

### [Table 2]

**Table 2**

| Reducible substance | Reduced product |
|---|---|
| Fe(CN)₆³⁻ | Fe(CN)₆⁴⁻ |
| Cu²⁺ | Cu⁺ |
| Ag⁺ | Ag |
| Zn²⁺ | Zn⁺ |
| Co²⁺ | Co⁺ |
| Ni²⁺ | Ni⁺ |
| Cd²⁺ | Cd⁺ |
| Co(NH₃)₆³⁺ | Co(NH₃)₆²⁺ |
| [Cr(CrO₄)₃]³⁺ | [Cr(CrO₄)₃]²⁺ |
| [Cr(en)₃]³⁺ | [Cr(en)₃]²⁺ |
| Eu³⁺ | Eu²⁺ |
| Yb³⁺ | Yb²⁺ |
| Sm³⁺ | Sm²⁺ |
| Tm³⁺ | Tm²⁺ |
| Ho³⁺ | Ho²⁺ |

| | |
|---|---|
| en: ethylenediamine | |

As the method for reducing the reducible substance, any method can be used as long as it is a method of reacting electrons released from the catalyst under visible light irradiation with the reducible substance, but among them, from the viewpoint of efficiently bringing the electrons released from the catalyst into contact with the reducible substance, it is preferable to carry out an electrolysis reaction in a state where the reducible substance is contained in an electrolyte liquid using an electrolysis cell including the catalyst in an electrode. A method of incorporating the reducible substance into the electrolyte liquid can be appropriately carried out depending on the type of the reducible substance. For example, when the reducible substance is liquid or solid, a method of dissolving or dispersing the reducible substance in the electrolyte liquid can be used. When the reducible substance is in the form of a gas, a method of bubbling the reducible substance in the electrolyte liquid can be used.

For example, when H₂O is used as the reducible substance, hydrogen is produced as a corresponding reduced product, and thus the catalyst electrode can be used as a catalyst electrode for producing hydrogen.

The catalysts are responsive to visible light (light having wavelengths of more than 400 nm and 830 nm or less), and thus can promote the reduction reaction by utilizing sunlight. In addition, the reduction reaction can be allowed to proceed even in an environment with a small amount of ultraviolet rays, such as an indoor space.

### [Catalyst Electrode]

The catalyst electrode of the present disclosure includes a catalyst layer (1) and a conductive layer (2), and the catalyst layer (1) contains the semiconductor catalyst (or the thin film).

The catalyst electrode can be used as an electrode (e.g., a cathode) in a reaction in which a reducible substance is reduced by electric energy to produce a corresponding reduced product.

### (Catalyst Layer (1))

The catalyst layer (1) contains the semiconductor catalyst (that is, a thin film containing nitrogen-containing diamond particles in a plane direction and a height direction).

The catalyst layer (1) has a thickness of, for example, 1 nm or more and 100 µm or less. From the viewpoint of exhibiting sufficient electron emission capability, the lower limit of the thicknesses is preferably 3 nm, more preferably 5 nm, further preferably 10 nm, further preferably 15 nm, further preferably 30 nm, further preferably 35 nm. From the viewpoint of suppressing electrical resistance, the upper limit of the thickness is preferably 10 µm, particularly preferably 1 µm, most preferably 100 nm, and especially preferably 50 nm. When the thickness of the catalyst layer (1) is less than the above range, the utilization efficiency of visible light for electron excitation decreases, and the electron emission capability tends to become insufficient. On the other hand, when the thickness of the catalyst layer (1) exceeds the above range, the amount of electron excitation through visible light irradiation becomes saturated, and the electrical resistance increases, and thus the reducing property tends to decrease.

### (Conductive Layer (2))

The conductive layer (2) is a layer containing a conductive member.

The conductive material constituting the conductive member is not particularly limited, and examples thereof include metals such as platinum, titanium, tantalum, nickel, copper, and aluminum; semiconductors such as carbon materials (for example, conductive diamond such as boron-doped diamond, graphene, carbon nanotubes, carbon black, and graphite) and silicon compounds (for example, silicon carbide). One type of these may be used alone, or two or more types thereof may be used in combination.

Among these, the conductive material is preferably a carbon material, particularly preferably conductive diamond, and most preferably boron-doped diamond, in terms of being inexpensive, having high mechanical strength, excellent durability, and having a small linear expansion coefficient.

Thus, the conductive layer (2) is preferably a layer having a diamond crystal structure in which some carbon atoms are replaced by boron atoms (hereinafter, sometimes referred to as "conductive layer (2-1)").

The conductive layer (2-1) contains carbon atoms and boron atoms as heteroatoms, and the boron atom concentration in the conductive layer (2-1) is, for example, 1 × 10¹⁹ atoms/cm³ or more, preferably 5 × 10¹⁹ atoms/cm³ or more, particularly preferably 3 × 10²⁰ atoms/cm³ or more, and especially preferably 1 × 10²¹ atoms/cm³ or more. The upper limit of the boron atom concentration is, for example, 5 × 10²² atoms/cm³, preferably 3 × 10²² atoms/cm³, particularly preferably 1 × 10²² atoms/cm³, most preferably 5 × 10²¹ atoms/cm³, and especially preferably 3 × 10²¹ atoms/cm³. When the conductive layer (2-1) contains boron atoms in the above range, the conductive layer (2-1) has excellent conductivity. When the boron atom concentration of the conductive layer (2-1) is less than the above range, the conductivity tends to become insufficient. On the other hand, when the boron atom concentration of the conductive layer (2-1) exceeds the above range, the diamond crystal structure tends to easily collapse.

The conductive layer (2-1) may contain heteroatoms other than boron atoms, but the concentration of the heteroatoms other than boron atoms is, for example, preferably 5 × 10²¹ atoms/cm³ or less from the viewpoint of providing high conductivity, and is more preferably 5 × 10²⁰ atoms/cm³ or less, even more preferably 5 × 10¹⁹ atoms/cm³ or less, further preferably 1 × 10¹⁹ atoms/cm³ or less, particularly preferably 1 × 10¹⁸ atoms/cm³ or less, most preferably 1 × 10¹⁷ atoms/cm³ or less, and especially preferably 1 × 10¹⁶ atoms/cm³ or less.

When the conductive layer (2-1) contains nitrogen atoms, the nitrogen atom concentration is, for example, preferably 5 × 10²⁰ atoms/cm³ or less, more preferably 1 × 10²⁰ atoms/cm³ or less, further preferably 1 × 10¹⁹ atoms/cm³ or less, further preferably less than 5 × 10¹⁸ atoms/cm³, preferably 1 × 10¹⁸ atoms/cm³ or less, and particularly preferably 1 × 10¹⁷ atoms/cm³ or less. The lower limit of the nitrogen atom concentration is, for example, 1 × 10¹⁶ atoms/cm³.

The thickness of the conductive layer (2) (the total thickness when the conductive layer (2) is formed from a plurality of layers) is not particularly limited, and is, for example, 1 µm or more, preferably 50 µm or more, and particularly preferably 100 µm or more. When the thickness of the conductive layer (2) is 100 µm or more, the conductive layer (2) has sufficient strength to be a self-supporting film and is easy to handle, and thus such a thickness is preferable. The upper limit of the thickness is, for example, 1 mm, and from the viewpoint of suppressing an increase in the electrical resistance value, the upper limit is preferably 500 µm, particularly preferably 300 µm, most preferably 250 µm and especially preferably 200 µm.

### (Other Layers)

The catalyst electrode may include another structure in addition to the catalyst layer (1) and the conductive layer (2).

The proportion of the total weight of the catalyst layer (1) and the conductive layer (2) in the total amount (100 wt.%) of the catalyst electrode is, for example, 60 wt.% or more, preferably 70 wt.% or more, more preferably 80 wt.% or more, particularly preferably 90 wt.% or more, and most preferably 95 wt.% or more. Note that the upper limit is 100 wt.%. That is, the catalyst electrode may be composed only of the catalyst layer (1) and the conductive layer (2).

The catalyst electrode has a thickness of, for example, 1001 nm or more, preferably 1010 nm or more, and particularly preferably 1050 nm or more. The upper limit of the coating film thickness is, for example, 1 mm, preferably 500 µm, particularly preferably 300 µm, and most preferably 200 µm.

When the catalyst electrode is disposed together with the counter electrode in a container containing a reducible substance to be in contact with the reducible substance and irradiated with visible light, the reducible substance (for example, H₂O) can be efficiently electrolyzed and reduced to produce a corresponding reduced product (H₂ when the reducible substance is H₂ O).

That is, when the catalyst electrode is used, solar energy can be converted into electric energy, and by reducing a reducible substance (for example, H₂O) using the electric energy, a corresponding reduced product (H₂ useful as clean energy when the reducible substance is H₂O) can be produced while emission of carbon dioxide is suppressed.

### [Method for Producing Catalyst Electrode]

The catalyst electrode may be produced by laminating the catalyst layer (1) including the catalyst and the conductive layer (2).

The catalyst electrode can be produced through a step of fixing the nitrogen-containing diamond particles on the conductive substrate to form the catalyst layer (1).

The conductive substrate is not particularly limited as long as it is a substrate formed of a conductive material, but among them, a conductive diamond substrate is particularly preferred, and a conductive substrate having a boron-doped diamond crystal structure is most preferred, from the viewpoint of being inexpensive, having a large mechanical strength, being excellent in durability, and having a small linear expansion coefficient.

Among the catalyst electrodes, a catalyst electrode in which the conductive layer (2) is the conductive layer (2-1) having a boron-doped diamond crystal structure can be produced, for example, through the following steps (Method 1):
Step A: fixing nitrogen-containing diamond particles on a substrate to form the catalyst layer (1); and
Step B: forming, on the catalyst layer (1), through a vapor deposition method, the conductive layer (2-1) having a boron-doped diamond crystal structure.

The following steps may also be provided after Step B:
Step C: removing the substrate to produce a laminate of the catalyst layer (1) and the conductive layer (2-1); and
Step D: subjecting a surface of the catalyst layer (1) of the resulting laminate to a hydrotreatment and/or a sp2 carbon removal treatment.

Steps A, C and D are the same as the steps 1, 2 and 3 in the production method of the catalyst, respectively.

In Step A, for example, the catalyst layer (1) may be formed by performing Step 1 and then performing Step 2 at least once.
Step 1: fixing, on a substrate having a positive or negative charge, nitrogen-containing diamond particles having a positive or negative charge that is opposite to that of the substrate;
Step 2: laminating, on the fixed nitrogen-containing diamond particles, nitrogen-containing diamond particles having a positive or negative charge that is opposite to that of the fixed nitrogen-containing diamond particles.

Alternatively, in Step A, onto a substrate having a positive or negative charge, a paint including nitrogen-containing diamond particles having a positive or negative charge that is opposite to that of the substrate may be applied and dried repeatedly a plurality of times.

### (Step B)

In Step B, through a vapor deposition method, a boron-doped diamond crystal structure (i.e., a growth film having a boron-doped diamond crystal structure) is formed on a surface of the catalyst layer (1) of the substrate / catalyst layer (1) laminate produced through Step A.

Examples of the vapor deposition method (CVD method) include a microwave plasma CVD method, a plasma CVD method, a hot-filament CVD method, and an optical CVD method. Among these, the microwave plasma CVD method is preferable in that a diamond crystal structure having excellent crystallinity can be rapidly formed.

The microwave plasma CVD method is a method for growing a boron-doped diamond crystal structure by guiding microwaves into a plasma generation chamber to decompose a carbon source and a boron source and generate plasmas, and then guiding the plasma onto a substrate heated to a temperature from 300 to 900°C. The boron atom content in the resulting diamond crystal structure can be controlled by adjusting the blending amount of the boron source added to the carbon source.

Examples of the carbon source include hydrocarbons such as methane, ethane, propane, ethylene, and acetylene; alcohols such as methanol and ethanol; and ketones such as acetone. One type of these may be used alone, or two or more types thereof may be used in combination.

As the boron source, for example, diborane, trimethylboron, trimethoxyborane, and boron oxide can be used.

Through this step, a substrate /catalyst layer (1) / conductive layer (2-1) laminate is produced.

The catalyst electrode can also be produced through the following steps (Method 2):
Step A': forming, on a substrate, through a vapor deposition method, the conductive layer (2-1) having a boron-doped diamond crystal structure;
Step B': fixing nitrogen-containing diamond particles on the conductive layer (2-1) to form the catalyst layer (1).

The following steps may also be provided after Step B':
Step C: removing the substrate to produce a laminate of the catalyst layer (1) and the conductive layer (2-1); and
Step D: subjecting a surface of the catalyst layer (1) of the resulting laminate to a hydrotreatment and/or a sp2 carbon removal treatment.

Step A' can be carried out in the same manner as Step B described above except that, instead of forming the boron-doped diamond crystal structure on the substrate having nitrogen-containing diamond particles fixed to a surface thereof, the boron-doped diamond crystal structure is formed on a substrate having seed crystals (e.g., diamond particles not containing nitrogen) fixed to a surface thereof.

Step B' can be carried out in the same manner as Step A described above except that, instead of applying the paint containing nitrogen-containing diamond particles onto the substrate, the paint containing nitrogen-containing diamond particles is applied onto the boron-doped diamond crystal structure produced in Step A'.

The catalyst electrode can also be produced through the following steps (Method 3):
Step A": fixing nitrogen-containing diamond particles on a conductive substrate having a boron-doped diamond crystal structure to form the catalyst layer (1);
Step D': subjecting a surface of the catalyst layer (1) of the resulting laminate to a sp2 carbon removal treatment.

Step A" can be carried out in the same manner as Step A described above, except for applying the paint containing nitrogen-containing diamond particles onto the conductive substrate having boron-doped diamond crystal structure. As the conductive substrate having a boron-doped diamond crystal structure, a substrate produced by forming, on a substrate, a conductive layer having a boron-doped diamond crystal structure by the same method as in Step A' and then removing the substrate may be used, or a commercially available product may be used.

**In** Step A", for example, the catalyst layer (1) is formed by performing Step 1' and then performing Step 2 at least once:
Step 1': fixing, on a conductive substrate having a boron-doped diamond crystal structure, nitrogen-containing diamond particles having a positive or negative charge that is opposite to that of the substrate;
Step 2: laminating, on the fixed nitrogen-containing diamond particles, nitrogen-containing diamond particles having a positive or negative charge that is opposite to that of the fixed nitrogen-containing diamond particles.

Alternatively, in Step A", onto a substrate having a positive or negative charge, a paint including nitrogen-containing diamond particles having a positive or negative charge that is opposite to that of the substrate may be applied and dried repeatedly a plurality of times.

As the conductive substrate having a boron-doped diamond crystal structure, for example, a growth film containing boron-doped diamond formed by a CVD method or the like, or the growth film subjected to surface treatment can be used. The growth film formed by the CVD method has a hydrogen-terminated boron-doped diamond crystal structure, and thus, has a positive charge. When the surface of the growth film formed by the CVD method is subjected to an acid treatment, the surface of the growth film is terminated with oxygen and has a negative charge.

**In** Step D', the catalyst layer (1) formed through Step A is subjected to a sp2 carbon removal treatment. The treatment can be performed by, for example, irradiating the formed catalyst layer (1) with hydrogen plasma. By performing the treatment, a dangling bond is formed on the surface of the catalyst layer (1), the nitrogen-containing diamond particles are bonded to each other with the formed dangling bond as a starting point, and the nitrogen-containing diamond particles and the conductive substrate are bonded to each other. Thus, the nitrogen-containing diamond particles are firmly bonded to the conductive substrate, and strength capable of withstanding the use as an electrode is imparted.

According to Method 3, the catalyst layer (1) / conductive layer (2-1) laminate can be produced without removing the substrate, and damage in removing the substrate can be avoided.

The conductive substrate used in Method 3 may have any shape as long as the coating material containing the nitrogen-containing diamond particles can be applied thereto, and the shape can be freely selected according to the application and design. The conductive substrate may have recesses and protrusions or may be curved. On the other hand, in Methods 1 and 2, in order to form the conductive layer (2-1) having a uniform thickness, it is important to keep the surface temperature of the substrate uniform when the conductive layer (2-1) having a boron-doped diamond crystal structure is formed by a vapor deposition method. Thus, it is preferable to use a substrate having a smooth surface and a uniform thickness.

In Method 3, without particular limitation a substrate formed of a conductive material can be used in place of the conductive substrate having a boron-doped diamond crystal structure.

### [Device for Producing Reduced Product]

A device for producing a reduced product of the present disclosure is a device including a means for reducing a reducible substance in the presence of the catalyst to produce a corresponding reduced product. The device for producing a reduced product includes at least the catalyst.

The device preferably includes a reaction section (= a section where a reduction reaction is carried out) in which the catalyst is disposed. The device may further include a supply section for supplying a reducible substance to the reaction section, a visible light irradiation section, a recovery section for recovering the resulting reduced product, and the like.

In the device, from the viewpoint of efficiently bringing electrons released from the catalyst by visible light irradiation into contact with a reducible substance, the reaction section is preferably an electrolysis cell including: a container that contains the reducible substance and an electrolyte liquid; an electrode including the catalyst (= a catalyst electrode including: a catalyst layer (1) including the catalyst; and a conductive layer (2)) disposed to be in contact with the reducible substance and the electrolyte liquid in the container; and a counter electrode.

The electrolyte liquid is preferably an aqueous electrolyte liquid containing water as a solvent. Examples of the electrolyte contained in the electrolyte liquid include potassium chloride, sodium chloride, lithium chloride, potassium hydroxide, sodium hydroxide, lithium hydroxide, potassium sulfate, sodium sulfate, zinc sulfate, zinc nitrate, zinc phosphate, zinc acetate, iron hydroxide, and manganese chloride. One type of these may be used alone, or two or more types thereof may be used in combination.

When the reducible substance is water, the device is a device for producing hydrogen, and includes, for example, an electrolysis cell (= water electrolysis cell) including: a container that contains water (preferably water including an electrolyte); an electrode including the catalyst (= a catalyst electrode including: a catalyst layer (1) including the catalyst; and a conductive layer (2)) disposed to be in contact with the water in the container; and a counter electrode (for example, a platinum electrode or the like).

The electrolysis cell may further include a separator and a power source for applying an external voltage.

When the device is used, solar energy can be efficiently converted into electric energy, and a reducible substance (e.g., H₂O) can be reduced using the electric energy. Thus, it is possible to produce a corresponding reduced product (H₂ useful as clean energy when the reducible substance is H₂O) while suppressing emission of carbon dioxide.

When H₂O is reduced by the method described in Examples under visible light irradiation using the electrolytic reaction device, the amount of H₂ produced is, for example, 0.1 ppm or more (for example, 0.1 to 5 ppm), preferably 0.5 ppm or more, particularly preferably 1 ppm or more, and most preferably 1.5 ppm or more.

When H₂O is reduced by the method described in Examples under visible light irradiation using the electrolytic reaction device, the Faradaic efficiency for H₂ generation is, for example, 10% or more, preferably 15% or more, particularly preferably 20% or more, and most preferably 40% or more.

The total reduction current density when H₂O is reduced by the method described in Examples under visible light irradiation using the electrolytic reaction device is, for example, 1.0 × 10⁻² mA/cm² or more, preferably 2.5 × 10⁻² mA/cm² or more, particularly preferably 5.0 × 10⁻² mA/cm² or more, most preferably 10.0 × 10⁻² mA/cm² or more, and especially preferably 15.0 × 10⁻² mA/cm² or more.

The configurations and their combinations of the present disclosure described above are merely examples, and addition, omission, substitution, and modification of the configurations may be appropriately made without departing from the gist of the present disclosure.

### Examples

Hereinafter, the present disclosure will be described in more detail by way of Examples, but the present disclosure is not limited to the following examples and is limited only by the claims.

### Example 1

### (Formation of Catalyst Layer (1))

A SiO₂/Si substrate was used as a substrate. The SiO₂/Si substrate was a laminate of SiO₂ (thickness of 100 nm) and n-type Si (thickness of 0.45 mm), with a diameter of 8 mm.

The SiO₂/Si substrate was subjected to an ultrasonic cleaning treatment with acetone, ethanol, and pure water and to an acid wash treatment.

A suspension of nitrogen-containing ζ+ nanodiamond particles (particle size D50: 5 nm) (concentration of N-ζ+nD particles: 1.0%, solvent: water, zeta potential: +50 mV) was applied onto the SiO₂/Si substrate after the above treatment, after which the substrate surface was thoroughly washed with pure water, and water remaining on the surface was removed by air blowing. Subsequently, a suspension of nitrogen-containing ζ- nanodiamond particles (particle size D50: 5 nm) (concentration of N-ζ-nD particles: 1.0%, solvent: water, zeta potential: -40 mV) was applied onto the treated SiO₂/Si substrate at room temperature, after which the substrate surface was thoroughly washed with pure water, and water remaining on the surface was removed by air blowing.

The step of immersing in the suspension of nitrogen-containing ζ+ nanodiamond particles, washing with pure water, immersing in the suspension of nitrogen-containing ζ- nanodiamond particles, and drying was further repeated four times to form ten nitrogen-containing nanodiamond particle layers. As a result, an N-nD particle film / SiO₂/Si substrate laminate was produced.

### (Formation of Conductive Layer (2))

Subsequently, boron-doped nanodiamonds (BDD) were grown under the following conditions on the N-nD particle film of the N-nD particle film / SiO₂/Si substrate laminate using a 2.45 GHz microwave plasma chemical vapor deposition device (manufactured by Arios Inc.) having a spherical resonator structure. As a result, a BDD / N-nD particle film / SiO₂/Si substrate laminate was produced.

### <CVD Conditions>

Plasma output: 900 W
Reaction pressure: 50 kPa
Substrate temperature: 890°C
Hydrogen flow rate: 100 sccm
Carbon source: methane (flow rate: 2 sccm)
Boron source: hydrogen-diluted 1% trimethylboron (flow rate: 1 sccm)
Growth time: 80 h

Subsequently, the SiO₂/Si substrate was completely dissolved and removed from the BDD / N-nD particle film / SiO₂/Si substrate laminate using a mixed liquid of hydrofluoric acid and nitric acid (pure water : HF stock liquid: nitric acid = 20 g/20 g/20 g), and an N-nD particle film / BDD laminate was produced. The resulting N-nD particle film/BDD laminate had a film thickness of 0.15 mm and was self-supporting.

Subsequently, the N-nD particle film-side surface of the N-nD particle film / BDD laminate was subjected to a hydrogen plasma treatment (2) (650 W, 40 kPa, 5 minutes, substrate temperature of 850°C, hydrogen flow rate of 100 sccm) to carry out hydrogen termination and remove sp2 carbons.

Through the above treatment, a hydrogen-terminated N-nD particle film / BDD laminate (1) was produced. The hydrogen-terminated N-nD particle film had a roughness Rms of 2 nm to 3 nm.

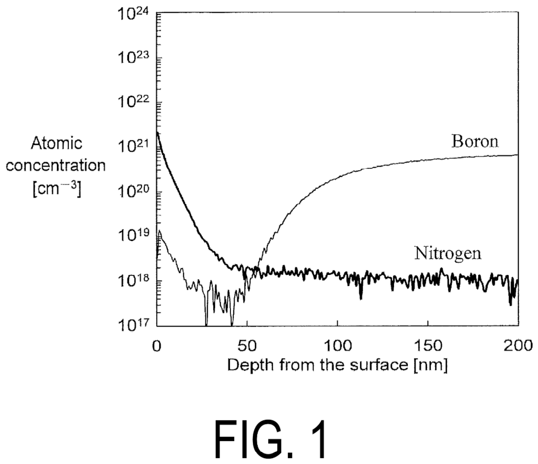

In addition, the concentrations of nitrogen atoms and boron atoms in the laminate (1) were measured by secondary ion mass spectrometry under the following conditions. The results are shown in FIG. 1.

### <Secondary Ion Mass Spectrometry Conditions>

Device: PHI ADEPT-1010TM (manufactured by ULVAC-PHI, Inc.)
Measurement conditions: primary accelerating voltage of 5.0 kV
Detection area: 54 × 54 µm²
Primary ion species: Cs⁺

The resulting hydrogen-terminated N-nD particle film / BDD laminate (1) was used as a catalyst electrode (1).

### Comparative Example 1

### (Formation of Catalyst Layer (1))

A SiO₂/Si substrate was used as a substrate. The SiO₂/Si substrate was a laminate of SiO₂ (thickness of 100 nm) and n-type Si (thickness of 0.45 mm), with a diameter of 8 mm.

The SiO₂/Si substrate was subjected to an ultrasonic cleaning treatment with acetone, ethanol, and pure water and to an acid wash treatment.

A suspension of nitrogen-containing nanodiamond particles (N-nD, particle size D50: 5 nm, trade name "DINNOVARE", manufactured by Daicel Corporation) (concentration of N-nD particles: 1.0%, solvent: water) was applied onto the treated SiO₂/Si substrate, and dried to form an N-nD particle film having a monolayer structure. As a result, an N-nD particle film / SiO₂/Si substrate laminate was produced.

The N-nD particle film surface of the resulting N-nD particle film / SiO₂/Si substrate laminate was subjected to a hydrogen plasma treatment (1) (900 W, 50 kPa, substrate temperature of 890°C, hydrogen flow rate of 100 sccm) for a period of time within 1 hour to remove sp2 carbons of the N-nD particle film.

### (Formation of Conductive Layer (2))

A BDD / N-nD particle film / SiO₂/Si substrate laminate (2) was produced in the same manner as in Example 1 except that the boron atom and nitrogen atom concentrations were changed as described in Table 3 below, and the hydrogen plasma treatment (1) was not carried out.

Thereafter, the SiO₂/Si substrate was removed in the same manner as in Example 1, and the N-nD particle film-side surface was subjected to hydrogen plasma treatment to carry out hydrogen termination and remove sp2 carbons.

Through the above treatment, a hydrogen-terminated N-nD particle film / BDD laminate (2) was produced.

The resulting hydrogen-terminated N-nD particle film / BDD laminate (2) was used as a catalyst electrode (2).

### (Evaluation)

The catalyst electrodes (1) and (2) produced in Examples and Comparative Examples were measured for the amount of hydrogen produced, the electron emission flow rate in the hydrogen production reaction, the total reduction current density in the hydrogen production reaction, and the H₂ generation Faraday efficiency in the hydrogen production reaction (H₂-F efficiency) by the following methods.

### <Measurement of Amount of Hydrogen Produced>

The reduction reaction of H₂O was carried out using the catalyst electrodes (1) and (2), and the amount of hydrogen produced was measured.

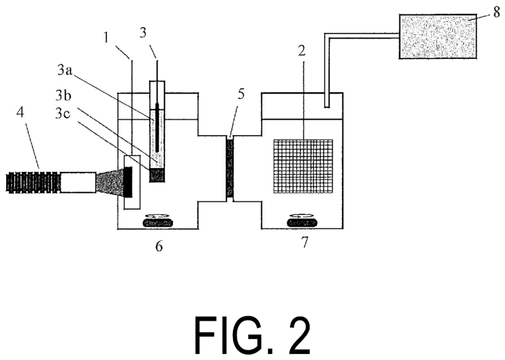

As illustrated in FIG. 2, the catalyst electrode (the surface area in contact with the electrolyte liquid was 0.2 cm²) was used as a working electrode 1, and a platinum mesh electrode was used as a counter electrode 2. A silver/silver chloride (Ag/AgCl) electrode 3a immersed in a saturated aqueous potassium chloride solution 3b in a glass tube having a porous glass liquid junction 3c was used as a reference electrode 3.

One compartment of an H-type cell (manufactured by EC Frontier Co., Ltd.) was used as an anode chamber 6, and the other compartment was used as a cathode chamber 7. The working electrode 1 and the reference electrode 3 were installed in the anode chamber 6, and the counter electrode 2 was installed in the cathode chamber 7. The two chambers were separated by a diaphragm 5 (Nafion 117), and then 30 mL of an electrolyte liquid (100 mM aqueous potassium chloride solution) were added to each of the anode chamber 6 and the cathode chamber 7.

The H-type cell was then sealed, after which a sampling bag 8 (Smart Bag PA, CEK-1, manufactured by GL Sciences Inc.) was attached, and application of a constant potential of -1.0 V (vs. Ag/AgCl) to the working electrode 1 was immediately started using an electrochemical measurement system (HSV-110, manufactured by Hokuto Denko Corporation). Simultaneously with the constant potential application, light emitted from a mercury-xenon light source (not illustrated, L9588-04, manufactured by Hamamatsu Photonics K.K.) was passed through an optical filter (not illustrated, A9616-09, manufactured by Hamamatsu Photonics K.K.) to cut the ultraviolet light, and thus only visible light was introduced into a quartz optical fiber (A10014-70-0110, manufactured by Hamamatsu Photonics K.K.). The light irradiation was performed in a manner that the visible light emitted from a fiber end 4 was directed toward a surface of the working electrode 1 (surface of the catalyst layer (1) side). The constant potential application and the light irradiation were continued for 15 minutes and then stopped at the same time. Thereafter, the hydrogen concentration (ppm) in the mixed gas collected in the sampling bag 8 was measured.

### <Measurement of Electron Emission Flow Rate in Hydrogen Production Reaction>

The electron emission efficiency of each of the catalyst electrodes (1) and (2) in response to irradiation with visible light was measured by the following method.

A gold foil was disposed on an insulating base in a measurement chamber (manufactured by Riko International Ltd., i-Series ultra-high vacuum microprobe and chamber, vacuum degree of 10⁻⁴ Pa or less, measurement temperature of 23 to 40°C), and the catalyst electrode was disposed thereon and oriented in a manner that the BDD side was in contact with the gold foil.

A voltage of -20 V was then applied to the back surface of the catalyst electrode using a semiconductor parameter analyzer (Keithley Semiconductor Characterization System 4200-SCS), a collector voltage (0 to 100 V) was applied at a position of 100 µm above the front surface of the catalyst electrode, and the catalyst electrode was then irradiated with visible light from a position 35 mm away from the laminate (1) in the same manner as in the <Measurement of Amount of Hydrogen Produced>, and the amount of generated current was measured.

### <Measurement of Total Reduction Current Density in Hydrogen Production Reaction>

Changes in the reduction current when a constant potential was applied for 15 minutes with the same device and under the same conditions as in the <Measurement of Amount of Hydrogen Produced> were recorded, and the total reduction current density was calculated by dividing an average value of the recorded changes by the electrode surface area.

### <Measurement of H₂-F Efficiency in Hydrogen Production Reaction>

Changes in the reduction current when a constant potential was applied for 15 minutes with the same device and under the same conditions as in the <Measurement of Amount of Hydrogen produced> were recorded, and the total amount of electricity resulting from the reduction reaction was calculated.

In addition, the amount of electricity used for producing hydrogen was calculated from the amount of hydrogen produced as determined in the <Measurement of Amount of Hydrogen Produced>. The ratio of the amount of electricity used for producing hydrogen to the total amount of electricity in the reduction reaction was expressed as a percentage and defined as the H₂-F efficiency.

The results are summarized and shown in the following table.

### [Table 3]

**Table 3**

| | Catalyst layer (1) | | | Conductive layer (2) | | Electron emission current | Total reduction current density [mA/cm²] | Amount of hydrogen produced [ppm] | H₂-F Efficiency [%] |
|---|---|---|---|---|---|---|---|---|---|
| | N concentration atoms/cm³ | Lamination method | Layer thickness (nm) with nitrogen concentration of 1 × 10 ¹⁹ or more | B concentration atoms/cm³ | Thickness µm | pA | | | |
| Example 1 | 2 × 10²¹ | Applied 10 times | 20 to 40 | 7 × 10²⁰ | 180 | 669.1 | 2.32 × 10⁻¹ | 1.85 | 43 |
| Comparative Example 1 | 4 × 10²⁰ | Applied once | 2 to 4 | 2 × 10²¹ | 150 | Detection limit or less | 2.23 × 10⁻² | 7.46 × 10⁻² | 18 |

### Example 2

### (Formation of Catalyst Layer (1))

As the conductive BDD substrate, conductive diamond electrodes [a laminate (8 mm in diameter) of BDD (thickness: about 10 µm) and conductive Si (thickness: 0.7 mm)] manufactured by Matsuo Sangyo Co., Ltd. were used.

The conductive BDD substrate was subjected to an ultrasonic cleaning treatment with acetone, ethanol, and pure water and to an acid wash treatment. Subsequently, the conductive BDD substrate was further subjected to a hydrogen plasma treatment using a microwave plasma CVD device for surface cleaning and hydrophilization.

Onto the conductive BDD substrate after the treatment, 40 µL of a suspension of nitrogen-containing ζ+ nanodiamond particles (particle size D50 : 5 nm) (concentration of N-ζ+nD particles: 1.0%, solvents: water, zeta potential: +50 mV) was applied, and the conductive BDD substrate after the application was rotated at a speed of 1000 rpm for 30 seconds using a spin coater (MS-B 100, manufactured by Mikasa Co., Ltd.) to spread the applied suspension. Subsequently, the rotation speed of the spin coater was changed to 6000 rpm and held for 2 minutes to evaporate the moisture on the conductive BDD substrate and dry the substrate.

The step of applying, spreading and drying the suspension of nitrogen-containing ζ+ nanodiamond particles was further repeated three times. Subsequently, the coating film was dried for 10 minutes at 60°C in the air using a hotplate (CHP-1700F, manufactured by AS ONE Corporation). Thus, a laminate (N-nD particle film / conductive BDD substrate laminate (3)) in which a plurality of nitrogen-containing nanodiamond particle layers were laminated on the conductive BDD substrate was produced. The roughness Rms of the N-nD particle film was 5 nm to 20 nm. This was used as a catalyst electrode (3).

### (Evaluation)

The catalyst electrode (3) produced in Example 2 was measured for the amount of hydrogen produced, the total reduction current density in the hydrogen production reaction, the LSV in the hydrogen production reaction, the amount of CO produced, and the total reduction current density in the CO generation reaction by the following methods. The measurement was performed in the same manner as described above except that the visible light irradiation was not performed, and this was used as a blank control.

### <Measurement of Amount of Hydrogen Produced >

The reduction reaction of H₂O was performed using the catalyst electrode (3), and the amount of hydrogen produced was measured.

As illustrated in FIG. 2, the laminate (1) (the surface area in contact with the electrolyte liquid was 0.2 cm²) was used as a working electrode 1, and a platinum mesh electrode was used as a counter electrode 2. A silver/silver chloride (Ag/AgCl) electrode 3a immersed in a saturated aqueous potassium chloride solution 3b in a glass tube having a porous glass liquid junction 3c was used as a reference electrode 3.

One compartment of an H-type cell (manufactured by EC Frontier Co., Ltd.) was used as a cathode chamber 9, and the other compartment was used as an anode chamber 10. The working electrode 1 and the reference electrode 3 were installed in the cathode chamber 9, and the counter electrode 2 was installed in the anode chamber 10. The two chambers were separated by a diaphragm 5 (Nafion 117), and then 30 mL of a 0.1 M aqueous potassium chloride solution were added as an electrolyte liquid to each chamber.

The H-type cell was then sealed, after which argon gas was bubbled through an introduction port 6 at a flow rate of 80 mL/min for 30 minutes and released from a gas discharge port 8 to deaerate the electrolyte liquid. While the argon gas flow rate was maintained at 80 mL/min, a sampling bag 7 (Smart Bag PA, CEK-1, manufactured by GL Sciences Inc.) was attached, and application of a constant potential of -2.0 V (vs. Ag/AgCl) to the working electrode 1 was immediately started using an electrochemical measurement system (HSV-110, manufactured by Hokuto Denko Corporation). In a case in which light irradiation was to be carried out, simultaneously with the constant potential application, light emitted from a mercury-xenon light source (not illustrated, L9588-04, manufactured by Hamamatsu Photonics K.K.) was passed through an optical filter (not illustrated, A9616-09, manufactured by Hamamatsu Photonics K.K.) to cut the ultraviolet light, and thus only visible light was introduced into a quartz optical fiber (A10014-70-0110, manufactured by Hamamatsu Photonics K.K.). The light irradiation was performed in a manner that the visible light emitted from a fiber end 4 was directed toward a surface of the working electrode 1 (surface of the electron excitation layer (1) side). The flow of argon gas, the constant potential application, and light irradiation were continued for 10 minutes and then stopped at the same time. Subsequently, a quantitative analysis of components contained in the mixed gas collected in the sampling bag 7 and the electrolyte liquid in the cathode chamber 9 was carried out, and the amount of hydrogen produced was calculated.

### <Measurement of Total Reduction Current Density in Hydrogen Production Reaction>

Changes in the reduction current when a constant potential was applied for 15 minutes with the same device and under the same conditions as in the <Measurement of Amount of Hydrogen Produced> were recorded, and the total reduction current density was calculated by dividing an average value of the recorded changes by the electrode surface area.

### <LSV Measurement>

Changes in the reduction current during a linear sweep of the potential of working electrode 1 from 0 V to -2.0 V was recorded using the same device as in the

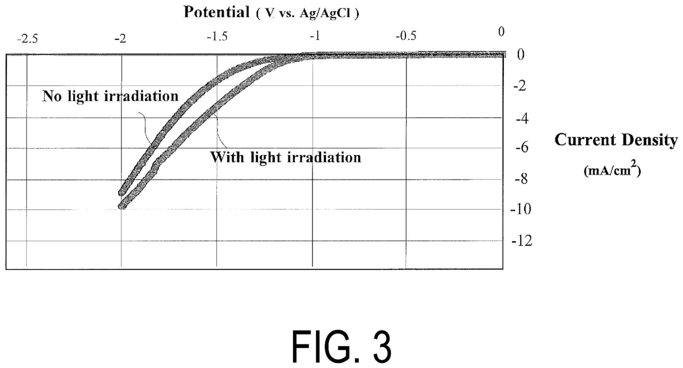

### <Measurement of Amount of Hydrogen Produced>. The results are shown in FIG. 3.

As seen from FIG. 3, visible light irradiation has an effect of reducing the applied voltage on the catalyst electrode of the present disclosure.

The results of the measurement of the amount of hydrogen produced and the measurement of the total reduction current density in the hydrogen production reaction are summarized in the following table.

### [Table 4]

**Table 4**

| | | Total reduction current density [mA/cm²] | Amount of hydrogen produced [mol/m²hr] |
|---|---|---|---|
| Example 2 | Visible light irradiation | 9.58 | 1.45 |
| | No visible light irradiation | 6.67 | 1.31 |

As seen from Table 4, visible light irradiation increases the total reduction current density by approximately 1.5 times, and as a result, the water reduction efficiency improves, indicating that hydrogen is produced more efficiently compared to the case without visible light irradiation.

### <Measurement of Amount of CO Produced>

The reduction reaction of carbon dioxide was performed using the catalyst electrode (3), and the amount of carbon monoxide produced was measured.

As illustrated in FIG. 2, the laminate (1) (the surface area in contact with the electrolyte liquid was 0.2 cm²) was used as a working electrode 1, and a platinum mesh electrode was used as a counter electrode 2. A silver/silver chloride (Ag/AgCl) electrode 3a immersed in a saturated aqueous potassium chloride solution 3b in a glass tube having a porous glass liquid junction 3c was used as a reference electrode 3.

One compartment of an H-type cell (manufactured by EC Frontier Co., Ltd.) was used as a cathode chamber 9, and the other compartment was used as an anode chamber 10. The working electrode 1 and the reference electrode 3 were installed in the cathode chamber 9, and the counter electrode 2 was installed in the anode chamber 10. The two chambers were separated by a diaphragm 5 (Nafion 117), and then 30 mL of a 0.1 M aqueous potassium chloride solution were added as an electrolyte liquid to each chamber.

The H-type cell was then sealed, after which CO₂ gas was bubbled through an introduction port 6 at a flow rate of 80 mL/min for 30 minutes and released from a gas discharge port 8 to deaerate the electrolyte liquid, and CO₂ was dissolved to a saturated concentration. While the CO₂ gas flow rate was maintained at 80 mL/min, a sampling bag 7 (Smart Bag PA, CEK-1, manufactured by GL Sciences Inc.) was attached, and application of a constant potential of -2.0 V (vs. Ag/AgCl) to the working electrode 1 was immediately started using an electrochemical measurement system (HSV-110, manufactured by Hokuto Denko Corporation). In a case in which light irradiation was to be carried out, simultaneously with the constant potential application, light emitted from a mercury-xenon light source (not illustrated, L9588-04, manufactured by Hamamatsu Photonics K.K.) was passed through an optical filter (not illustrated, A9616-09, manufactured by Hamamatsu Photonics K.K.) to cut the ultraviolet light, and thus only visible light was introduced into a quartz optical fiber (A10014-70-0110, manufactured by Hamamatsu Photonics K.K.). The light irradiation was performed in a manner that the visible light emitted from a fiber end 4 was directed toward a surface of the working electrode 1 (surface of the electron excitation layer (1) side). The flow of CO₂, the constant potential application, and the light irradiation were continued for 10 minutes and then stopped at the same time. Subsequently, a quantitative analysis of components contained in the mixed gas collected in the sampling bag 7 and the electrolyte liquid in the cathode chamber 9 was carried out, and the amount of hydrogen produced and the amount of CO produced were calculated.

### <Measurement of Total Reduction Current Density in CO Generation Reaction>

Changes in the reduction current when a constant potential was applied for 15 minutes with the same device and under the same conditions as in the <Measurement of Amount of CO Produced> were recorded, and the total reduction current density was calculated by dividing an average value of the recorded changes by the electrode surface area.

The results are summarized and shown in the following table.

### [Table 5]

**Table 5**

| | | Total reduction current density [mA/cm²] | Amount of hydrogen produced [mol/m²hr] | Amount of CO produced [mol/m²hr] |
|---|---|---|---|---|
| Example 2 | Visible light irradiation | 8.54 | 0.687 | 0.223 |
| | No visible light irradiation | 8.59 | 1.11 | 0.026 |

As seen from Table 5, in the catalyst electrode of the present disclosure, when visible light irradiation is performed, the reduction efficiency of carbon dioxide is improved, and carbon monoxide is produced about 10 times more than in the case of no visible light irradiation.

To summarize the above, configurations and variations of the present disclosure are additionally described below.
[1] A semiconductor catalyst including a thin film containing nitrogen-containing diamond particles in a plane direction and a height direction.
[2] The semiconductor catalyst according to [1], wherein the thin film is configured in a manner that the nitrogen-containing diamond particles are arranged in the plane direction and the height direction, and, among the nitrogen-containing diamond particles, adjacent nitrogen-containing diamond particles in the plane direction and the height direction are in close contact with each other.
[3] The semiconductor catalyst according to [1] or [2], wherein a nitrogen atom concentration of the thin film is 10 × 10¹⁸ atoms/cm³ or more.
[4] The semiconductor catalyst according to any one of [1] to [3], wherein the thin film has a thickness of 5 nm or more.
[5] The semiconductor catalyst according to any one of [1] to [4], wherein a surface of the semiconductor catalyst has negative electron affinity.
[6] The semiconductor catalyst according to any one of [1] to [5], wherein the semiconductor catalyst is a visible light-responsive catalyst.
[7] The semiconductor catalyst according to any one of [1] to [6], wherein the semiconductor catalyst is a catalyst for reduction.
[8] The semiconductor catalyst according to any one of [1] to [7], wherein the semiconductor catalyst is a catalyst for producing hydrogen.
[9] A method for producing a semiconductor catalyst, the method including:
   fixing, on a substrate having a positive or negative charge, nitrogen-containing diamond particles having a positive or negative charge, the positive or negative charge of the nitrogen-containing diamond particles being opposite to that of the substrate; and
   laminating, on the fixed nitrogen-containing diamond particles, nitrogen-containing diamond particles having a positive or negative charge, the positive or negative charge of the laminated nitrogen-containing diamond particles being opposite to that of the fixed nitrogen-containing diamond particles,
   wherein
   the step of laminating is performed at least once after the step of fixing to produce the semiconductor catalyst described in any one of [1] to [8].
[10] A method for producing a reduced product, the method including reducing a reducible substance under visible light irradiation and in the presence of the semiconductor catalyst described in any one of [1] to [8] to produce a corresponding reduced product.
[11] A device for producing a reduced product, the device including the semiconductor catalyst described in any one of [1] to [8].
[12] A catalyst electrode for producing hydrogen, the catalyst electrode including a catalyst layer (1) and a conductive layer (2),
   wherein
   the catalyst layer (1) contains the semiconductor catalyst described in any one of [1] to [8].
[13] A catalyst electrode for producing hydrogen, the catalyst electrode including a catalyst layer (1) and a conductive layer (2),
   wherein
   the catalyst layer (1) includes a thin film containing nitrogen-containing diamond particles in a plane direction and a height direction.
[14] A catalyst electrode for producing hydrogen, the catalyst electrode including a catalyst layer (1) and a conductive layer (2),
   wherein
   the catalyst layer (1) includes a thin film configured in a manner that nitrogen-containing diamond particles are arranged in a plane direction and a height direction, and, among the nitrogen-containing diamond particles, adjacent nitrogen-containing diamond particles in the plane direction and the height direction are in close contact with each other.
[15] The catalyst electrode for producing hydrogen according to [13] or [14], wherein a nitrogen atom concentration of the thin film is 10 × 10¹⁸ atoms/cm³ or more.
[16] The catalyst electrode for producing hydrogen according to any one of [12] to [15], wherein the conductive layer (2) is a layer having a diamond crystal structure in which some carbon atoms are replaced by boron atoms.
[17] The catalyst electrode for producing hydrogen according to any one of [12] to [16], wherein a boron atom concentration in the conductive layer (2) is 1 × 10¹⁹ atoms/cm³ or more.
[18] The catalyst electrode for producing hydrogen according to any one of [12] to [17], wherein the catalyst layer (1) has a thickness from 1 nm to 100 µm, and the conductive layer (2) has a thickness of 1 µm or more.
[19] A method for producing hydrogen, the method including reducing water under visible light irradiation using the catalyst electrode for producing hydrogen described in any one of [12] to [18], to produce hydrogen.
[20] A method for producing hydrogen, the method including producing hydrogen using a device including a water electrolysis cell, the water electrolysis cell including:
   a water container;
   the catalyst electrode for producing hydrogen described in any one of [12] to [18] disposed to be in contact with water in the container; and
   a counter electrode.
[21] A device for producing hydrogen, the device including a water electrolysis cell, the water electrolysis cell including:
   a water container;
   the catalyst electrode for producing hydrogen according to any one of [12] to [18] disposed to be in contact with water in the container; and
   a counter electrode.

### Industrial Applicability

The semiconductor catalyst of the present disclosure is formed of diamond particles that are physically and chemically very stable, and thus has excellent durability and is not limited in the use environment.

Furthermore, the semiconductor catalyst of the present disclosure can easily release electrons when irradiated with visible light or sunlight, and can exhibit an effect of promoting a reduction reaction.

The semiconductor catalyst having the above characteristics can be suitably used as a catalyst for reduction or a visible light-responsive catalyst.

When the semiconductor catalyst is used for an electrode, it is possible to efficiently carry out the water electrolysis reaction by effectively utilizing the inexhaustible solar energy, thereby enabling the production of hydrogen, which is a clean energy, while suppressing the generation of carbon dioxide.

### Reference Signs List

- 1: Working electrode
- 2: Counter electrode
- 3: Reference electrode
- 3a: Ag/AgCl electrode
- 3b: Saturated aqueous potassium chloride solution
- 3c: Porous glass liquid junction
- 4: Fiber end
- 5: Diaphragm
- 6: Anode chamber
- 7: Cathode chamber
- 8: Sampling bag

## Claims

1. A semiconductor catalyst comprising a thin film containing nitrogen-containing diamond particles in a plane direction and a height direction.

2. The semiconductor catalyst according to claim 1, wherein the thin film is configured in a manner that the nitrogen-containing diamond particles are arranged in the plane direction and the height direction, and adjacent diamond particles in the plane direction and the height direction are in close contact with each other.

3. The semiconductor catalyst according to claim 1 or 2, wherein a nitrogen atom concentration of the thin film is 10 × 10¹⁸ atoms/cm³ or more.

4. The semiconductor catalyst according to claim 1 or 2, wherein the thin film has a thickness of 5 nm or more.

5. The semiconductor catalyst according to claim 1 or 2, wherein a surface of the semiconductor catalyst has negative electron affinity.

6. The semiconductor catalyst according to claim 1 or 2, wherein the semiconductor catalyst is a visible light-responsive catalyst.

7. The semiconductor catalyst according to claim 1 or 2, wherein the semiconductor catalyst is a catalyst for reduction.

8. The semiconductor catalyst according to claim 1 or 2, wherein the semiconductor catalyst is a catalyst for producing hydrogen.

9. A method for producing a semiconductor catalyst, the method comprising:
fixing, on a substrate having a positive or negative charge, nitrogen-containing diamond particles having a positive or negative charge, the positive or negative charge of the nitrogen-containing diamond particles being opposite to that of the substrate; and
laminating, on the fixed nitrogen-containing diamond particles, nitrogen-containing diamond particles having a positive or negative charge, the positive or negative charge of the laminated nitrogen-containing diamond particles being opposite to that of the fixed nitrogen-containing diamond particles,
wherein
the step of laminating is performed at least once after the step of fixing to produce the semiconductor catalyst described in claim 1 or 2.

10. A method for producing a reduced product, the method comprising reducing a reducible substance under visible light irradiation and in the presence of the semiconductor catalyst described in claim 1 or 2 to produce a corresponding reduced product.

11. A device for producing a reduced product, the device comprising the semiconductor catalyst described in claim 1 or 2.

12. A catalyst electrode for producing hydrogen, the catalyst electrode comprising a catalyst layer (1) and a conductive layer (2),
wherein
the catalyst layer (1) includes the semiconductor catalyst described in claim 1 or 2.

13. The catalyst electrode for producing hydrogen according to claim 12, wherein the conductive layer (2) is a layer having a diamond crystal structure in which some carbon atoms are replaced by boron atoms.

14. The catalyst electrode for producing hydrogen according to claim 13, wherein a boron atom concentration in the conductive layer (2) is 1 × 10¹⁹ atoms/cm³ or more.

15. The catalyst electrode for producing hydrogen according to claim 12, wherein the catalyst layer (1) has a thickness from 1 nm to 100 µm, and the conductive layer (2) has a thickness of 1 µm or more.

16. A method for producing hydrogen, the method comprising reducing water under visible light irradiation using the catalyst electrode for producing hydrogen described in claim 12 to produce hydrogen.

17. A device for producing hydrogen, the device comprising a water electrolysis cell, the water electrolysis cell including:
a water container;
the catalyst electrode for producing hydrogen described in claim 12 disposed to be in contact with water in the container; and
a counter electrode.
